# EUROPÄISCHE PATENTANMELDUNG

(11) **EP 1 783 341 A1**
(43) Veröffentlichungstag der Anmeldung: **09.05.2007**
(21) Anmeldenummer: 05023851.8
(22) Anmeldetag: 02.11.2005
(51) Int. Cl.: F02B 31/06, F02D 9/16

(54) **Drall-Tumble-Erzeuger**

(71) Anmelder: Hofmann, Arno, 63571 Gelnhausen (DE)
(72) Erfinder: Hofmann, Arno, 63571 Gelnhausen (DE)
(74) Vertreter: Quermann, Helmut

(57) **Zusammenfassung**

Die Erfindung betrifft einen schwenkbaren Drall-Tumble-Erzeuger zur Veränderung des Strömungsverhaltens in einem Spül- oder Einlasskanal (1) einer Wärmekraftmaschine.

Erfindungsgemäß ist vorgesehen, dass der Drall-Tumble-Erzeuger einen Ventilkörper (4) aufweist, die Spül- bzw. Einlasskanalquerschnittsfläche in ihrer Größe durch den Ventilkörper veränderbar ist und die Strömungsrichtung des strömenden Mediums mittels des Ventilkörpers in unterschiedlichen Raumrichtungen veränderbar ist.

## Beschreibung

Die Erfindung betrifft einen schwenkbaren Drall-Tumble-Erzeuger zur Veränderung des Strömungsverhaltens in einem Spül- oder Einlasskanal einer Wärmekraftmaschine.

Aus dem Stand der Technik sind sogenannte Drall- bzw. Tumbleklappen bekannt, die zur Aufgabe haben, den Ladungswechsel und die Zylinderinnenströmung am Verbrennungsmotor zu beeinflussen. Diese Drall- bzw. Tumbleklappe ist bei Viertakthubkolbenmotoren in der Ansaugleitung eines jeden Zylinders angebracht, mit der Möglichkeit, durch Einschwenken der Drall- bzw. Tumbleklappe in den Kanal, dessen Strömungsquerschnittsfläche zu verkleinem, um eine höhere Gasgeschwindigkeit der Frischgase im Kanal beim Passieren der Klappe zu erzeugen. Die Drall- bzw. Tumbleklappe lenkt das Frischgas an die der Klappe gegenüberliegende Kanalwand, an der das nun schneller strömende Gas geführt wird, womit am Teller des Einlassventils ein geänderter Geschwindigkeitsverlauf der in den Brennraum einströmenden Frischgase gegenüber einem Kanal ohne Drall- bzw. Tumbleklappe erzwungen wird.

Die Drallklappe erhält ihre Bezeichnung aus deren Wirkungsweise, beim Einströmen der Frischgase in den Zylinder, den Drehimpuls der Zylinderinnenströmmung parallel zur Zylinderachse zu verstärken. Die Tumbleklappe erzeugt eine Erhöhung des Drehimpulses der Zylinderinnenströmung, dessen Vektor senkrecht auf der Zylinderachse und senkrecht zur Kanalachse steht.

Die unterschiedlichen Strömungsrichtungen zwischen Drall- bzw. Tumbleklappe werden durch die Einbauposition der Klappe im Kanal, d. h. durch die Lage der Drall- bzw. Tumbleklappenschwenkachse zur Zylinderachse vorgegeben.

An Verbrennungsmotoren mit zwei parallelen Einlassventilen wird zur Drallerhöhung der Zylinderinnenströmung einer der beiden Einlasskanäle sukzessive durch die Drallklappe verengt, wodurch die Frischgase vornehmlich durch den Kanal ohne Drallklappe strömen und sich somit ein unterschiedlicher Gasmassenfluss an den Ventiltellern in den Zylinder ergibt.

Die Tumbleströmung in Verbrennungsmotoren wird durch eine Klappenposition bewerkstelligt, die von der "Kanalunterseite", d. h. die zum Kolben des Motors zeigende Seite, in den Kanal eingeschwenkt wird, um die Gasströmung zur "Kanaloberseite", d. h. die zum Zylinderkopf hinweisende Seite, zu konzentrieren.

Nachteilig beim Stand der Technik ist, dass sowohl Drall-, als auch Tumbleklappen eine im Motorbetrieb nicht änderbare Klappendrehachse besitzen, wodurch eine Variation der räumlichen Strömungsausrichtung im Kanal unabhängig von der Kanalverengung nicht möglich ist. Dies hat zur Folge, dass zwar die Gasgeschwindigkeit im Kanal durch das Schwenken einer Drall- bzw. Tumbleklappe geändert werden kann, aber nicht deren Orientierung im Kanal, die damit verbundene Anströmung des Ventiltellers und die daraus folgende Einströmung in den Brennraum.

Ebenso ist eine große Entfernung der Drall- bzw. Tumbleklappe vom Einlassventil nachteilig zu bewerten, da der durch die Klappe beschleunigte Gasmassenstrom sich zur Kanalklappenseite als freier Strahl aufweitet und die erwünschte asymmetrische Anströmung des Einlassventils entsprechend verringert wird.

Stand der Technik sind ebenfalls Leitbleche, die parallel zur Kanalachse im Einlasskanal angeordnet sind und nahe an das Einlassventil reichen, um eine zusätzliche Strömungsführung an das Einlassventil hervorzurufen. Durch solche Leitbleche wird der Einlasskanal in "Etagen" unterteilt, die wahlweise durch Sperrorgane verschlossen werden können und somit das Frischgas auf kleinerem Strömungsquerschnitt mit höherer Gasgeschwindigkeit dem Einlassventil zugeführt wird.

Nachteilig sind Leitbleche hinsichtlich ihres erhöhten Strömungswiderstandes bei Volllast wegen höherer Wandreibung zu bewerten und wegen der fehlenden Veränderbarkeit ihrer Strömungsausrichtung auf das Einlassventil.

Sowohl Otto- als auch Dieselmotoren zeigen für die Gemischbildungs- und Verbrennungsgüte eine eindeutige Abhängigkeit von der Zylinderinnenströmung. Besonders gilt dies für Verbrennungsmotoren mit innerer Gemischbildung.

Ottomotoren benötigen vielfach für jeden Betriebspunkt eine individuelle Zylinderinnenströmung, die sowohl um die Einspritzdüse, als auch an der Zündkerze bestimmte Strömungsgeschwindigkeiten der Ladung in Betrag und Richtung verlangen, um optimale Verbrennungsgüten zu erreichen. Diese betriebspunktindividuellen Strömungsfelder im Zylinder werden durch Überlagerungen von Drall- und Tumblevektoren der Ladung beschrieben. Die erforderliche betriebspunktindividuelle Änderung von Drall- und Tumblevektor lässt sich mit Drall- bzw. Tumbleklappen nach dem Stand der Technik auf Grund der vorgegebenen Lage der Klappendrehachse nicht bewerkstelligen.

Dieselmotoren mit zwei Einlassventilen zeigen häufig eine Anordnung der Einlasskanäle in Form eines Füllungskanals und eines Drallkanals. Der Füllungskanal kann bei niedrigen Motordrehzahlen durch eine Drallklappe sukzessive verschlossen werden, um den Großteil der Zylinderladung durch den Drallkanal zu befördern, mit daraus folgender drallbehafteter Zylinderinnenströmung. Für die Nennleistung des Motors ist der Drallkanal nachteilig, da er den Luftaufwand auf Grund seines gegenüber dem Füllungskanal höheren Strömungswiderstandes verringert.

Neuerliche Ventiltriebssysteme mit variablen Steuerzeiten zeichnen sich vornehmlich durch eine Verkürzung der Einlasssteuerzeiten im Niedriglast-Drehzahlbereich aus. Die Zeitfenster des Ladungswechsels zur Erzeugung von Ladungsbewegungen werden oftmals verkürzt und entfernen sich vom Zeitpunkt der Einspritzung bzw. Zündeinleitung, wie beispielsweise beim Miller-Verfahren, was häufig eine Verschlechterung der Gemischbildung bewirkt, da die erforderliche Ladungsbewegung im Zylinder reduziert wird. Eine betriebspunktindividuelle Anregung der Zylinderinnenströmung würde erhebliche Vorteile bezüglich Gemischbildungs- und Verbrennungsgüte aufweisen.

In der Zeitschrift "MTZ 9/2004", Seiten 684 bis 694, ist unter dem Titel "Der neue 3,0-I-V6-TDI-Motor von AUDI/Teil 2: Thermodynamik, Applikation und Abgasnachbehandlung" ein Dieselmotor mit Drallklappe beschrieben.

In der Zeitschrift "MTZ 3/2004" ist auf den Seiten 170 bis 178 unter dem Titel "Neue Generation der kleinen Ottomotoren-Baureihe für Opel Corsa, Agila und Astra" ein Ottomotor mit Drallklappe beschrieben.

In der Zeitschrift "MTZ 6/2004", Seiten 436 bis 452, ist unter dem Titel "Der neue V6-Ottomotor M 272 von Mercedes-Benz" ein Ottomotor mit Tumbleklappe beschrieben.

In der Zeitschrift "MTZ 3/2005" ist auf den Seiten 202 bis 209 unter dem Titel "Zylinderinnenströmung und zyklische Schwankungen bei Benzin-Direkteinspritzung" die Verwendung von Leitblechen bei Verbrennungsmotoren beschrieben.

Aufgabe der vorliegenden Erfindung ist es, einen schwenkbaren Drall-Tumble-Erzeuger der Eingangs genannten Art zu schaffen, der die vorstehend ausführlich erörterten Nachteile des Standes der Technik nicht aufweist und gegenüber dem Stand der Technik einen besseren Ladungswechsel und eine bessere Zylinderinnenströmung am Verbrennungsmotor ermöglicht.

Gelöst wird die Aufgabe bei einem schwenkbaren Drall-Tumble-Erzeuger der Eingangs genannten Art dadurch, dass der Drall-Tumble-Erzeuger einen Ventilkörper aufweist, die Spül- bzw. Einlasskanalquerschnittsfläche in ihrer Größe durch den Ventilkörper veränderbar ist, und die Strömungsrichtung des strömenden Mediums mittels des Ventilkörpers in unterschiedliche Raumrichtungen veränderbar ist.

Vorzugsweise ermöglicht der erfindungsgemäße Drall-Tumble-Erzeuger einen beliebig einstellbaren Strömungsquerschnitt im Einlass- bzw. Spülkanal des Verbrennungsmotors. Die durch den Ventilkörper freigegebene Strömungsfläche kann im Kanal in unterschiedlichen Ausrichtungen positioniert werden, womit das durch den Ventilkörper abgelenkte Frischgas mit einer Vorzugsrichtung auf den/die Ventilteller des/der Einlassventil(e)s trifft und von diesem geführt, sich im Brennraum als Zylinderinnenströmung fortsetzt. Die freie Strömungsquerschnittsfläche am Drall-Tumble-Erzeuger ist vornehmlich für die erzeugte Gasgeschwindigkeit verantwortlich und die Position der freien Strömungsquerschnittsfläche maßgeblich für die Strömungsrichtung. Der Ventilkörper ist insbesondere um mindestens zwei Raumachsen schwenkbar. Denkbar ist, den Ventilkörper zusätzlich in Längsrichtung des Einlass- bzw. Spülkanals zu verschieben.

Die durch den Ventilkörper freigegebene Strömungsfläche kann im Kanal in unterschiedlichen Ausrichtungen positioniert werden, wobei das durch den Spül- oder Einlasskanal strömende Medium durch einen geschlossenen oder offenen Ausschnitt des Ventilkörpers strömt.

Je näher der Drall-Tumble-Erzeuger am Einlassventil bzw. der Steuerkante (z. B. bei Verwendung bei einem 2-Takt-Motor) des Spülkanals sitzt, desto ausgeprägter ist die Vorzugsrichtung der Strömung am Ventilteller. Es können mit dem Drall-Tumble-Erzeuger sowohl Drall-, als auch Tumbleströmungen oder Überlagerungen aus beiden Strömungsfeldern im Zylinder erzeugt werden. Besitzt ein Zylinder mehr als ein Einlassventil bzw. Spülkanal, das bzw. der mit jeweils einem Drall-Tumble-Erzeuger versehen ist, so kann durch Superposition der einzelnen Kanalströmungen eine weitere Variabilität der Zylinderinnenströmung erreicht werden.

Der Ventilkörper kann auf unterschiedliche Art und Weise ausgestaltet sein, sofern er geeignet ist, die vorstehend diskutierten Strömungsbedingungen zu erfüllen. Eine bevorzugte Gestaltung sieht vor, dass der Ventilkörper als Kugelventil ausgebildet ist. Dieses Kugelventil lässt sich insbesondere mittelbar oder unmittelbar um seinen Kugelmittelpunkt drehen. Das Kugelventil ist insbesondere in einer Führung verstellbar gelagert, wobei die Führung um eine parallel zur Kanalachse verlaufenden Achse schwenkbar ist. Insbesondere ist das Kugelventil in einer inneren Führung gelagert. Es wird ferner als Vorteilhaft angesehen, wenn das Kugelventil in einer parallel zur Kanalachse verfahrbaren Führung zum Kippen des Kugelventils gelagert ist. Insbesondere ist das Kugelventil hierzu in einer äußeren Führung gelagert. Gemäß einer weiteren vorteilhaften Gestaltung ist vorgesehen, dass der Ventilkörper als zylindrisches Ventil oder Klappe ausgebildet ist, das bzw. die sich unmittelbar um seine Zylinderachse bzw. Klappenachse und mittelbar um eine Achse parallel zum Spül- bzw. Einlasskanal drehen lässt.

Die Größe und Ausrichtung des Strömungsquerschnitts des Ventilkörpers wird insbesondere über eine Positionsänderung mindestens eines Stellglieds herbeigeführt. Das Stellglied bzw. die Stellglieder führen vorteilhaft Dreh- und/oder Hubbewegungen zur Positionsänderung des Ventilkörpers aus. Das bzw. die Stellglieder können, unter Berücksichtigung der technischen Anforderungen, beliebig gestaltet sein, beispielsweise in Art der vorstehend erläuterten inneren und äußeren Führung(en).

Es ist insbesondere daran gedacht, dass vor jedem Einlassventil bzw. Spülkanal ein Drall-Tumble-Erzeuger verwendet wird.

Weitere Details der Erfindung sind in der nachfolgenden Figurenbeschreibung für zwei bevorzugte Ausführungsbeispiele näher erläutert, ohne hierauf beschränkt zu sein. Es zeigt:
- Fig. 1: einen Längsmittelschnitt durch den Spül- bzw. Einlasskanal einer Wärmekraftmaschine sowie das Einlassventil und den Drall-Tumbler-Erzeuger, wobei der Drall-Tumble-Erzeuger einen als Kugelventil ausgebildeten Ventilkörper aufweist und sich dieser Ventilkörper in seiner Offenstellung befindet, in der er den Spülbzw. Einlasskanal vollständig freigibt,
- Fig. 2: einen Schnitt gemäß Figur 1, wobei das Kugelventil in einer ungefähr halboffenen Stellung veranschaulicht ist, wobei diese Stellung durch Drehen des Kugelventils um den Kugelmittelpunkt, quer zur Längsachse des Spül- bzw. Einlasskanals, erzeugt ist,
- Fig. 3: einen Schnitt gemäß der Figuren 1 und 2, wobei das Kugelventil in einer Stellung veranschaulicht ist, die, ausgehend von der Stellung in Figur 2, durch eine überlagerte Drehung des Kugelventils um eine Achse parallel zur Längsachse des Spül- bzw. Einlasskanals erzielt wird,
- Fig. 3A: die in den Figuren 1 bis 3 gezeigte Anordnung, in einer Stellung gemäß Figur 3, allerdings in einer anderen Schnittdarstellung, senkrecht zur Schnittebene gemäß der Figuren 1 bis 3 geschnitten, veranschaulicht,
- Fig. 3B: eine räumliche Ansicht der Anordnung gemäß der Figuren 1 bis 3A, in einer räumlichen Darstellung, für den Zustand des Kugelventils gemäß der Figuren 3 und 3A,
- Fig.4: eine modifizierte Gestaltung des Ventilkörpers, der zylindrisch ausgebildet ist, veranschaulicht zusammen mit der inneren Führung für den Ventilkörper und dem Motoreinlassventil.

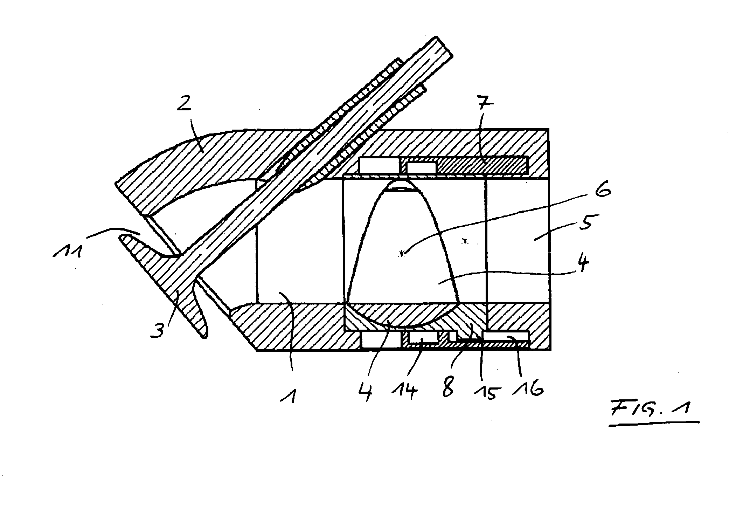

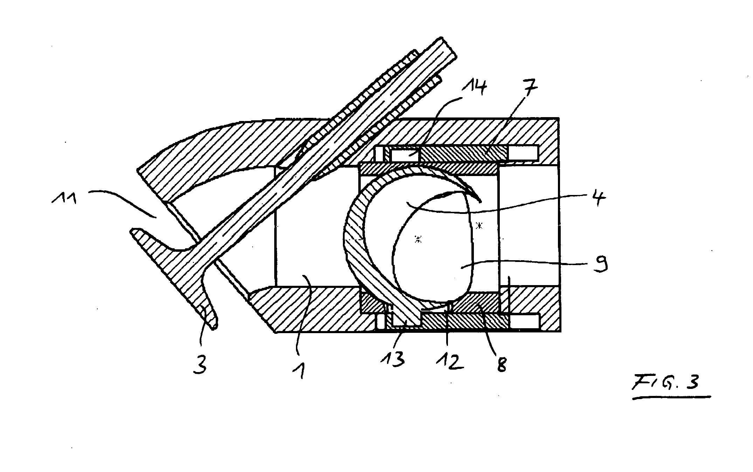

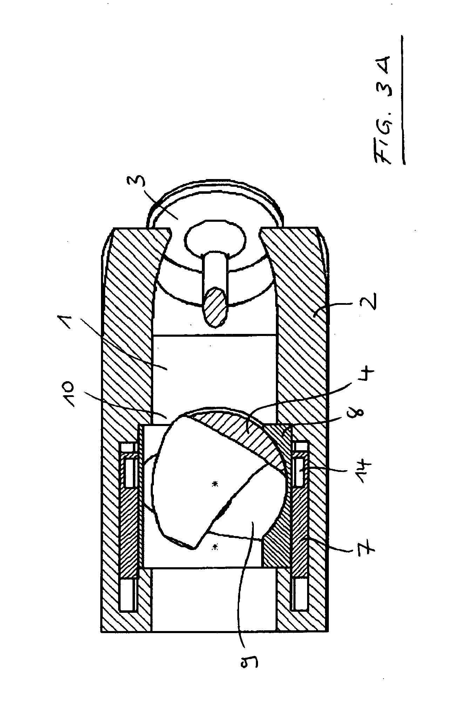

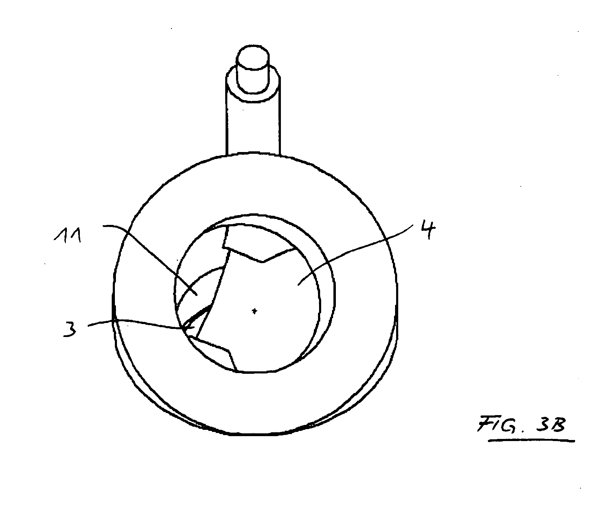

Die Darstellung der Figuren 1 bis 3, 3A und 3B zeigt einen Spül- oder Einlasskanal 1 einer Wärmekraftmaschine. In der Einlasskanalwand 2 des Einlasskanals 1 ist ein Motoreinlassventil 3 gelagert. Des Weiteren ist in der Einlasskanalwand 2 mittelbar der bei dieser Ausführungsform als Kugelventil 4 ausgebildete Drall-Tumble-Erzeuger gelagert. Die Rotationsachse des Einlasskanals 1 ist mit der Bezugsziffer 5, die Rotationsachse des Kugelventils mit der Bezugsziffer 6 bezeichnet. Diese beiden Achsen sind in Abstand voneinander angeordnet, sodass sich eine gewisse Exzentrizität ergibt.

Die Einlasskanalwand 2 nimmt eine äußere Führung 7 und die äußere Führung eine innere Führung 8 auf. Die innere Führung 8 ist mit einer Kugelfläche 9 für das Kugelventil 4 versehen. Bei teilweise geöffnetem Kugelventil 4 ergibt sich zwischen diesem und der Einlasskanalwand 2 ein offener Kanalspalt 10. Mit der Bezugsziffer 11 ist der bei geöffnetem Motoreinlassventil 3 sich zwischen diesem und der Einlasskanalwand 2 ergebende Ventilspalt bezeichnet.

Der Ventilkörper in Art des Kugelventils 1 lässt sich bei dieser Ausführungsform, in der inneren Führung 8 gelagert, um seinen Kugelmittelpunkt verdrehen, so dass sowohl der Öffnungsquerschnitt, als auch dessen Position im Einlasskanal 1 frei einstellbar sind.

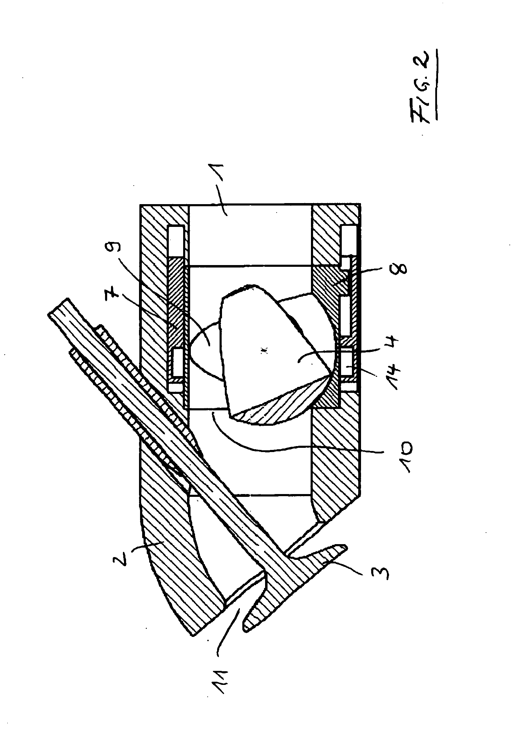

Die innere Führung 8 weist eine Nut 12 auf, durch die ein vorstehender Zapfen 13 des Kugelventils 4 ragt. Mittels einer Hubbewegung der äußeren Führung 7 parallel zur Kanalachse 5 wird das Kugelventil 4 zum Verändern der Strömungsquerschnittsfläche gezwungen, da der zum Mittelpunkt des Kugelventils exzentrische, vorstehende Zapfen 13 in einer radialen Nut der äußeren Führung 7 läuft, deren Verschiebung eine Kippbewegung des Kugelventils 4 bedingt. Diese Drehung des Kugelventils 4 ist, ausgehend von der Stellung in Figur 1, in der Figur 2 veranschaulicht. - Zur Verstellung der Kugelventilausrichtung im Kanal 1 wird die innere Führung 8 herangezogen, die die Nut 12 aufweist und durch die der vorstehende Zapfen 13 des Kugelventils 4 ragt und somit durch Drehung der inneren Führung 8 um die Rotationsachse 6 das Kugelventil 4 ebenfalls um dieselbe verdreht wird. Diese Drehung ist, ausgehend von der Stellung in Figur 2, in der Figur 3 veranschaulicht. Auch in den Figuren 3A und 3B ist diese weitere Drehposition des Kugelventils, ausgehend von der verdrehten Stellung in Figur 2, veranschaulicht.

Die innere Führung 8 kann an ihrer Außenumfangsfläche mit einem hervorstehenden Zapfen 15 versehen sein, der in eine Nut 16 der Innenumfangsfläche der äußeren Führung 7 hineinreicht, wodurch eine herbeigeführte Drehung der äußeren Führung um ihre Achse ebenso die innere Führung rotieren lässt und damit, wie oben beschrieben, die Kugelventilausrichtung ändert.

Ist die Nut 16 in der äußeren Führung 7 parallel zur Achse 6 angebracht, so wird durch das Verdrehen der äußeren Führung die Kugelventilausrichtung und durch die Hubbewegung derselben die freie Spülquerschnittsfläche des Kugelventils eingestellt. Beide Bewegungsabläufe können unabhängig voneinander vollzogen werden.

Folgt die Nut 16 in der äußeren Führung einer beliebigen sich nicht selbstschneidenden gekrümmten Bahn, so wird alleinig durch eine Hubbewegung der äußeren Führung 7 der inneren Führung 8 eine Drehbewegung aufgezwungen. Über die räumliche Gestaltung der Nut 16 wird jedem einstellbaren Öffnungsquerschnitt des Kugelventils 4 eindeutig eine Kugelventilraumausrichtung zugeordnet. Die Raumausrichtung des Kugelventils ist in diesem Fall ein abhängiger Parameter der frei wählbaren Spülquerschnittsfläche, mit der Eigenschaft, dass lediglich eine Hubbewegung der äußeren Führung 7 zur Verstellung des Kugelventils 4 vollzogen werden muss.

Der Antrieb zum Verstellen des Kugelventils 4 kann durch konventionelle elektromechanische Aktuatoren erfolgen.

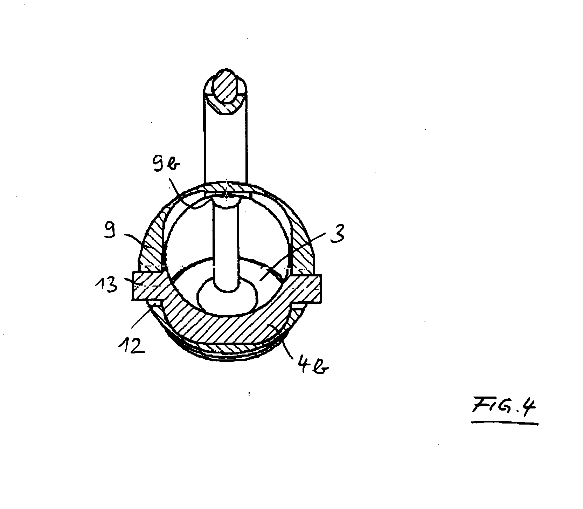

In der Figur 4 ist eine Ausführung des Drall-Tumble-Erzeugers mit zylindrischem Ventilkörper veranschaulicht. Mit der Ausführungsform nach den Figuren 1 bis 3 in ihrer Funktion bzw. ihrem Aufbau übereinstimmende Teile sind der Einfachheit halber mit denselben Bezugsziffern bezeichnet.

Veranschaulicht ist in dieser räumlichen Darstellung gemäß Figur 4 das Ventil, das als Zylinderwalzenventil 4b ausgebildet ist, ferner die Zylinderfläche 9b der inneren Führung. Diese Zeichnung zeigt im Querschnitt den Ventilkörper mit der inneren Führung 8 und dem Motoreinlassventil 3, jedoch ohne Einlasskanal und äußere Führung.

## Patentansprüche

1. Schwenkbarer Drall-Tumble-Erzeuger zur Veränderung des Strömungsverhaltens in einem Spül- oder Einlasskanal (1) einer Wärmekraftmaschine, **dadurch gekennzeichnet, dass** der Drall-Tumble-Erzeuger einen Ventilkörper (4, 4b) aufweist, die Spül- bzw. Einlasskanalquerschnittsfläche in ihrer Größe durch den Ventilkörper (4, 4b) veränderbar ist, und die Strömungsrichtung des strömenden Mediums mittels des Ventilkörpers (4, 4b) in unterschiedliche Raumrichtungen veränderbar ist.

2. Drall-Tumble-Erzeuger nach Anspruch 1, **dadurch gekennzeichnet, dass** die Spül- bzw. Einlasskanalquerschnittsfläche in ihrer Größe durch den Ventilkörper (4, 4b) beliebig verringerbar ist.

3. Drall-Tumble-Erzeuger nach Anspruch 1 oder 2, **dadurch gekennzeichnet, dass** das durch den Spül- oder Einlasskanal (1) strömende Medium durch einen Ausschnitt des Ventilkörpers (4, 4b) strömt.

4. Drall-Tumble-Erzeuger nach Anspruch 3, **dadurch gekennzeichnet, dass** der Ventilkörper (4, 4b) um mindestens zwei Raumachsen schwenkbar ist.

5. Drall-Tumble-Erzeuger nach einem der Ansprüche 1 bis 4, **dadurch gekennzeichnet, dass** die Strömungsrichtung des strömenden Mediums mittels des Ventilkörpers (4, 4b) in beliebigen Richtungen ablenkbar ist.

6. Drall-Tumble-Erzeuger nach einem der Ansprüche 1 bis 5, **dadurch gekennzeichnet, dass** der Ventilkörper (4, 4b) nahe vor dem Einlassventil (3) bzw. der Steuerkante des Spülkanals angeordnet ist.

7. Drall-Tumble-Erzeuger nach einem der Ansprüche 1 bis 6, **dadurch gekennzeichnet, dass** der Ventilkörper als Kugelventil (4) ausgebildet ist.

8. Drall-Tumble-Erzeuger nach Anspruch 7, **dadurch gekennzeichnet, dass** das Kugelventil (4) sich mittelbar oder unmittelbar um seinen Kugelmittelpunkt drehen lässt.

9. Drall-Tumble-Erzeuger nach Anspruch 7 oder 8, **dadurch gekennzeichnet, dass** das Kugelventil (4) in einer Führung (8) verstellbar gelagert ist, wobei die Führung (8) um eine parallel zur Kanalachse (5) verlaufende Achse (6) schwenkbar ist, insbesondere das Kugelventil (4) in einer inneren Führung (8) gelagert ist.

10. Drall-Tumble-Erzeuger nach einem der Ansprüche 7 bis 9, **dadurch gekennzeichnet, dass** das Kugelventil (4) in einer parallel zur Kanalachse (5) verfahrenbaren Führung (7) zum Kippen des Kugelventils (4) gelagert ist, insbesondere in einer äußeren Führung (7) gelagert ist.

11. Drall-Tumble-Erzeuger nach Anspruch 9 oder 10, **dadurch gekennzeichnet, dass** eine eindeutige kinematische Zwangsbedingung zwischen den Bewegungsabläufen der Führungen (7, 8) besteht.

12. Drall-Tumble-Erzeuger nach einem der Ansprüche 1 bis 6, **dadurch gekennzeichnet, dass** der Ventilkörper als zylindrisches Ventil (4b) oder Klappe ausgebildet ist, das bzw. die sich unmittelbar um seine Zylinderachse bzw. Klappenachse und mittelbar um eine Achse parallel zum Spül- bzw. Einlasskanal (1) drehen lässt.

13. Drall-Tumble-Erzeuger nach einem der Ansprüche 1 bis 12, **dadurch gekennzeichnet, dass** die Größe und Ausrichtung des Strömungsquerschnitts des Ventilkörpers (4, 4b) über die Positionsänderung mindestens eines Stellgliedes (7 bzw. 8) herbeigeführt wird.

14. Drall-Tumble-Erzeuger nach Anspruch 13, **dadurch gekennzeichnet, dass** das bzw. die Stellglied(er) (7, 8) Dreh- und/oder Hubbewegungen zur Positionsänderung des Ventilkörpers (4, 4b) ausführen.

15. Drall-Tumble-Erzeuger nach einem der Ansprüche 1 bis 14, **dadurch gekennzeichnet, dass** vor jedem Einlassventil (3) bzw. Spülkanal ein Drall-Tumble-Erzeuger verwendet wird.
